# EUROPÄISCHE PATENTSCHRIFT

(11) **EP 3 819 199 B1**
(45) Veröffentlichungstag und Bekanntmachung des Hinweises auf die Patenterteilung: **30.08.2023**
(21) Anmeldenummer: 20202753.8
(22) Anmeldetag: 20.10.2020
(51) Int. Cl.: B62J 27/00, B60W 40/10, B62J 45/414, B62J 45/415, B60K 28/14

(54) **VERFAHREN UND VORRICHTUNG ZUR STEUERUNG EINES ZWEIRADS MIT EINEM ELEKTROMOTOR SOWIE EIN ZWEIRAD MIT SOLCH EINER VORRICHTUNG**
METHOD AND DEVICE FOR CONTROLLING A BICYCLE WITH AN ELECTRIC MOTOR AND A TWO-WHEELED VEHICLE WITH SUCH A DEVICE
PROCÉDÉ ET DISPOSITIF DE COMMANDE D'UN DEUX ROUES DOTÉ D'UN MOTEUR ÉLECTRIQUE AINSI QUE DEUX ROUES DOTÉ D'UN TEL DISPOSITIF

(30) Priorität: 11.11.2019 DE 102019217396
(43) Veröffentlichungstag der Anmeldung: 12.05.2021
(73) Patentinhaber: Robert Bosch GmbH, 70442 Stuttgart (DE)
(72) Erfinder: Landa, Sven, 71732 Tamm (DE); Volquardsen, Anders, 71638 Ludwigsburg (DE)

(56) Entgegenhaltungen:
- EP-A2- 3 031 707
- CN-Y- 2 498 053
- US-A1- 2002 039 951
- US-A1- 2003 132 837
- US-A1- 2019 176 622

## Beschreibung

### Stand der Technik

Die Erfindung betrifft ein Verfahren und eine Vorrichtung zur Steuerung eines Zweirads mit einem Elektromotor.

Zweiräder, insbesondere Motorräder, waren in der Vergangenheit überwiegend mit einem Verbrennungsmotor ausgestattet. Im angeschalteten Zustand läuft dieser Verbrennungsmotor und erzeugt entsprechende Vibrationen, was dem Benutzer einen Rückschluss über den aktuellen Zustand des Motors gibt. Fällt solch ein Zweirad um, wird typischerweise zuerst der Motor, beispielsweise über die Zündung oder einen sogenannten Kill-Switch, vom Nutzer ausgeschaltet und anschließend das Motorrad aufgerichtet, da ansonsten die Gefahr besteht, dass beim Aufrichten der Gashebel am Lenker versehentlich betätigt wird und das Motorrad unkontrolliert anfährt.

Bei Zweirädern mit Elektromotor ist der Motor jedoch nicht hörbar und erzeugt auch keine Vibrationen. Folglich besteht die Gefahr, dass ein Benutzer ein umgefallenes Zweirad aufrichtet, obwohl dessen Motor noch an ist und gegebenenfalls ein Drehmoment auf ein Antriebsrad geben kann, wenn beispielsweise beim Aufrichten versehentlich der Gashebel betätigt wird. Dies kann zu schweren Unfällen führen. Den Stand der Technik stellt hier die US 2002/039951 A1 dar. Es werden nämlich die folgenden Verfahrensschritte gezeigt:
Verfahren zur Steuerung eines Zweirads (50) mit einem Elektromotor (60), aufweisend wenigstens die folgenden Verfahrensschritte:a. Ermitteln eines Neigungswinkels (β) des Zweirads (50) zu einem ersten Zeitpunkt,d. Ermitteln einer Geschwindigkeit (v) des Zweirads (50) zu einem ersten Zeitpunkt;b. Vergleichen des ermittelten Neigungswinkels (β) mit einem ersten Schwellenwert (S1), und wenn der ermittelte Neigungswinkel (β) größer als der erste Schwellenwert (S1) ist.

### Offenbarung der Erfindung

Die Erfindung betrifft ein Verfahren zur Steuerung eines Zweirads mit einem Elektromotor, aufweisend wenigstens folgende Verfahrensschritte:
a. Ermitteln eines Neigungswinkels des Zweirads zu einem ersten Zeitpunkt,
d. Ermitteln einer Geschwindigkeit (v) des Zweirads (50) zu einem ersten Zeitpunkt;
b. Vergleichen des ermittelten Neigungswinkels mit einem ersten Schwellenwert, und wenn der ermittelte Neigungswinkel größer als der erste Schwellenwert ist,
e. Vergleichen der ermittelten Geschwindigkeit (v) mit einem zweiten Schwellenwert (S2), und wenn die ermittelte Geschwindigkeit (v) kleiner als der zweite Schwellenwert (S2) ist,
c. Ansteuern des Zweirads (50) durch Nicht-Einlesen und/oder Nicht-Weiterleiten eines Signals des Gashebels, Abschalten des Elektromotors und/oder durch Unterbrechen einer mechanischen Verbindung zwischen Elektromotor und Antriebsrad, dass kein Drehmoment mittels des Elektromotors an ein Antriebrad des Zweirads abgebbar ist.

Ein Zweirad mit einem Elektromotor kann hierbei beispielsweise ein E-Bike oder ein Motorrad mit elektrischem Antrieb oder Hybridantrieb sein.

Unter Neigungswinkel ist zu verstehen, wie weit das Fahrzeug zur Seite gekippt ist. Hierbei wird von einer senkrechten Achse relativ zur Fahrbahnebene ausgegangen. Ist der Neigungswinkel beispielsweise 0 Grad, ist das Zweirad senkrecht auf einer Straße ausgerichtet. Ist der Neigungswinkel dagegen 90 Grad, ist das Zweirad vermutlich umgefallen und liegt seitlich auf der Straße. Entsprechend kann auch der Unterschied zwischen einer abweichenden Ausrichtung des Zweirads und einer Lotrichtung als Neigungswinkel verstanden werden.

Unter Antriebrad ist das Rad des Zweirads zu verstehen, welches vom Elektromotor zur Vorwärtsbewegung des Zweirads angesteuert wird.

Der Verfahrensschritt c kann beispielsweise umgesetzt werden, indem der Gashebel nicht mehr eingelesen wird beziehungsweise das Signal vom Gashebel nicht weitergeleitet wird und daher der Elektromotor entsprechend nicht angesteuert wird. Alternativ oder zusätzlich kann auch der Elektromotor einfach abgeschaltet werden. Zudem kann alternativ oder zusätzlich beispielsweise die mechanische Verbindung zwischen Elektromotor und Antriebrad an einer Stelle unterbrochen werden, zum Beispiel indem eine Kupplung entsprechend angesteuert wird, wodurch insbesondere ein Leerlauf des Elektromotors umgesetzt wird, um die Drehmomentabgabe an das Antriebsrad zu unterbinden.

Vorteilhaft ist hierbei, dass bei Überschreiten eines vorbestimmten ersten Schwellenwerts, eine weitere Abgabe eines Drehmoments verhindert werden kann.

Der erste Schwellenwert kann hierbei derartig gewählt werden, dass ein Überschreiten des Schwellenwerts ein Umkippen des Zweirads vermuten lässt.

Der erste Schwellenwert kann beispielsweise mit 45° vorbestimmt werden.

Dies führt folglich dazu, dass das umgekippte Zweirad aufgerichtet werden kann, ohne dass die Gefahr besteht, dass beim Aufrichten ein Drehmoment abgegeben wird und das Zweirad unkontrolliert angetrieben wird. Hierdurch können somit entsprechende Unfälle vermieden werden.

In einer Ausgestaltung des erfindungsgemäßen Verfahrens ist vorgesehen, dass im Verfahrensschritt c das Zweirad derartig angesteuert wird, dass bis zu einem zweiten Zeitpunkt kein Drehmoment mittels des Elektromotors an das Antriebsrad des Zweirads abgebbar ist, wobei der zweite Zeitpunkt nach dem ersten Zeitpunkt liegt. Vorteilhaft ist hierbei, dass der zweite Zeitpunkt entsprechend gewählt werden kann, sodass dem Benutzer ausreichend Zeit zum Aufrichten des Zweirads gegeben wird. Der zweite Zeitpunkt kann beispielsweise 10 Minuten nach dem ersten Zeitpunkt liegen, um dem Nutzer ausreichend Zeit zum Aufrichten des Zweirads zu geben.

In einer Ausgestaltung des erfindungsgemäßen Verfahrens ist vorgesehen, dass im Verfahrensschritt c das Zweirad in einen Neutral-Modus überführt wird, wobei im Neutral-Modus kein Drehmoment mittels des Elektromotors an das Antriebsrad des Zweirads abgebbar ist.

Vorteilhaft ist hierbei, dass im Neutral-Modus das Zweirad entsprechend gegen eine unkontrollierte Abgabe von einem Drehmoment gesichert ist. Insbesondere kann dem Benutzer auch der jeweilige Fahrmodus über beispielsweise ein Anzeigeelement am Zweirad angezeigt werden, sodass dieser erkennt, ob er das Fahrzeug ohne mögliche Probleme aufstellen kann.

Insbesondere kann nach dem Verfahrensschritt c ein weiterer Verfahrensschritt ablaufen, in welchem der Elektromotor derartig angesteuert wird, dass ein Drehmoment mittels des Elektromotors wieder abgebbar ist. Beispielsweise kann dies durch einen Wahlhebel des Zweirads erfolgen, welcher das Zweirad vom Neutral-Modus in einen Fahr-Modus versetzt. Alternativ oder zusätzlich kann das Zweirad derartig angesteuert werden, dass eine Drehmomentabgabe nach dem zweiten Zeitpunkt wieder ermöglicht wird.

In einer erfindungsgemäßen Verfahrens ist vorgesehen, dass vor dem Verfahrensschritt b ein Verfahrensschritt d abläuft, in welchem, insbesondere zum ersten Zeitpunkt, eine Geschwindigkeit des Zweirads ermittelt wird, wobei wenn im Verfahrensschritt b der ermittelte Neigungswinkel größer als der erste Schwellenwert ist, nach dem Verfahrensschritt b ein Verfahrensschritt e abläuft, in welchem die ermittelte Geschwindigkeit mit einem zweiten Schwellenwert verglichen wird, und wenn die ermittelte Geschwindigkeit kleiner als der zweite Schwellenwert ist, nach dem Verfahrensschritt e der Verfahrensschritt c abläuft.

Vorteilhaft ist hierbei, dass zusätzlich zum Neigungswinkel noch die Geschwindigkeit des Zweirads berücksichtigt wird. Insbesondere fällt ein Zweirad in den meisten Fällen im Stillstand um, oder aber wenn es geschoben wird. Somit kann der zweite Schwellenwert entsprechend klein gewählt werden, beispielsweise 5 oder 10 km/h, um diesen Fall abzudecken.

In einer Ausgestaltung des erfindungsgemäßen Verfahrens ist vorgesehen, dass wenn im Verfahrensschritt b der ermittelte Neigungswinkel größer als der erste Schwellenwert ist, nach dem Verfahrensschritt b ein Verfahrensschritt d abläuft, in welchem eine Geschwindigkeit des Zweirads ermittelt wird, und nach dem Verfahrensschritt d ein Verfahrensschritt e abläuft, in welchem die ermittelte Geschwindigkeit mit einem zweiten Schwellenwert verglichen wird, wobei wenn die ermittelte Geschwindigkeit kleiner als der zweite Schwellenwert ist, nach dem Verfahrensschritt e der Verfahrensschritt c abläuft.

Vorteilhaft ist hierbei, dass zusätzlich zum Neigungswinkel noch die Geschwindigkeit des Zweirads berücksichtigt wird. Insbesondere fällt ein Zweirad in den meisten Fällen im Stillstand um, oder aber wenn es geschoben wird. Somit kann der zweite Schwellenwert entsprechend klein gewählt werden, beispielsweise 5 oder 10 km/h, um diesen Fall abzudecken.

In einer Ausgestaltung des erfindungsgemäßen Verfahrens ist vorgesehen, dass wenn im Verfahrensschritt e die ermittele Geschwindigkeit größer gleich dem zweiten Schwellenwert ist, nach dem Verfahrensschritt e ein Verfahrensschritt f abläuft, in welchem der ermittelte Neigungswinkel mit einem dritten Schwellenwert verglichen wird, wobei der dritte Schwellenwert größer als der erste Schwellenwert ist, und wenn der ermittelte Neigungswinkel größer als der dritte Schwellenwert ist, nach dem Verfahrensschritt f der Verfahrensschritt c abläuft.

Vorteilhaft ist hierbei, dass das Verfahren weniger Fehler aufweist. So ist es bei einer hohen Geschwindigkeit möglich, dass der Neigungswinkel des Zweirads größer als der erste Schwellenwert ist, da sich das Zweirad beispielsweise in einer Kurvenfahrt entsprechend zur Seite neigt. Durch den Vergleich des Neigungswinkels mit einem dritten Schwellenwert, wenn das Zweirad eine entsprechende Geschwindigkeit oberhalb des zweiten Schwellenwerts aufweist, kann somit auf ein Umkippen des Zweirads während der Fahrt geschlossen und daraufhin die Drehmomentabgabe verhindert werden. Der dritte Schwellenwert kann beispielsweise 60° oder 75° betragen. Hierdurch kann auch bei einer entsprechenden Fahrt, bei welcher das Zweirad beispielsweise in Kurven stark zur Seite geneigt ist, davon ausgegangen werden, dass die Neigung welche den dritten Schwellenwert übersteigt, auf ein Umkippen des Zweirads schließen lässt.

In einer Ausgestaltung des erfindungsgemäßen Verfahrens ist vorgesehen, dass im Verfahrensschritt d die Geschwindigkeit mittels eines am Zweirad angeordneten Beschleunigungssensors ermittelt wird.

Vorteilhaft ist hierbei, dass dies eine einfache Möglichkeit darstellt, die Geschwindigkeit des Fahrzeugs zu ermitteln.

Der Beschleunigungssensor ist wenigstens ein einachsiger Beschleunigungssensor, welcher entsprechend entlang der Fahrtrichtung des Zweirads ausgerichtet ist. Es kann jedoch auch ein mehrachsiger Beschleunigungssensor sein, falls beispielsweise weitere Beschleunigungswerte erfasst werden sollen. Hierbei kann der mehrachsige Beschleunigungssensor auch aus mehreren, einachsigen Beschleunigungssensoren aufgebaut sein.

Durch eine entsprechende Transformation können bei einem mehrachsigen Beschleunigungssensor auch die Beschleunigungswerte entlang der Fahrtrichtung ermittelt werden. In Abhängigkeit von diesen Beschleunigungswerten kann beispielweise durch Integration die Geschwindigkeit des Zweirads ermittelt werden.

Insbesondere ist der Beschleunigungssensor fest am Zweirad angeordnet.

Unter fest angeordnet ist zu verstehen, dass der Beschleunigungssensor derartig am Zweirad angeordnet werden kann, dass auf das Zweirad wirkende Beschleunigungen mittels des Beschleunigungssensors erfasst werden können. Dies bedeutet, dass der Beschleunigungssensor die gleiche relative Bewegung wie das Zweirad erfährt.

Eine weitere Ausgestaltung der Erfindung sieht vor, dass im Verfahrensschritt b der Neigungswinkel mittels eines am Zweirad angeordneten Beschleunigungssensor ermittelt wird.

Vorteilhaft ist hierbei, dass insbesondere bei einer Ermittlung von Geschwindigkeit und Neigungswinkel kein zusätzlicher Sensor notwendig ist, um dies umsetzen. Hierdurch kann eine entsprechende Vorrichtung kostengünstiger hergestellt werden.

Der Beschleunigungssensor ist wiederum insbesondere ein mehrachsiger Beschleunigungssensor. Anhand des erfassten Beschleunigungssignals kann hierbei auf einen Neigungswinkel des Zweirads geschlossen werden.

In einer Ausgestaltung des erfindungsgemäßen Verfahrens ist vorgesehen, dass im Verfahrensschritt b der Neigungswinkel mittels eines am Zweirad angeordneten Neigungssensors ermittelt wird.

Vorteilhaft ist hierbei, dass der Neigungswinkel sehr einfach ermittelt werden kann und keine komplizierten Rechenprozess umgesetzt werden müssen.

Wird der Neigungswinkel mit dem Beschleunigungssensor und dem Neigungssensor ermittelt, kann zudem beispielsweise eine Plausibilisierung erfolgen, indem die Messwerte der beiden Sensoren miteinander verglichen werden.

Die Erfindung betrifft zudem eine Vorrichtung zur Steuerung eines Zweirads mit einem Elektromotor, wobei die Vorrichtung dazu eingerichtet ist, ein erfindungsgemäßes Verfahren durchzuführen.

Insbesondere kann die Vorrichtung entsprechend am Zweirad anbringbar sein.

Bevorzugt weist die Vorrichtung den Neigungssensor und/oder den Beschleunigungssensor auf, welche über die Vorrichtung fest am Zweirad angeordnet sind. Zudem weist die Vorrichtung insbesondere eine Verarbeitungseinheit auf, welche das erfindungsgemäße Verfahren entsprechend umsetzt. Hierbei ist unter anderem das Abgreifen der Messwerte zur Ermittlung des Neigungswinkels oder auch der Geschwindigkeit des Zweirads, das Vergleichen der Messwerte mit den jeweiligen Schwellenwerten und das derartige Ansteuern des Zweirads zu verstehen, dass im entsprechenden Fall kein Drehmoment auf das Antriebsrad wirkt.

Alternativ oder zusätzlich kann die Vorrichtung bzw. die Verarbeitungseinheit jedoch auf einen Beschleunigungssensor und/oder einen Neigungssensor zurückgreifen, welche bereits im Zweirad angeordnet sind und somit nicht zwingend zur Vorrichtung gehören. So könnte beispielsweise eine Vehicle-Control-Unit (VCU) des Zweirads oder auch ein Batterie-Management-System (BMS) des Zweirads den jeweiligen Sensor bereits aufweisen.

Des Weiteren betrifft die Erfindung ein Zweirad mit einem Elektromotor und mit einer erfindungsgemäßen Vorrichtung.

### Zeichnungen

Fig. 1 zeigt ein erstes Ausführungsbeispiel eines erfindungsgemäßen Verfahrens zur Steuerung eines Zweirads mit einem Elektromotor.
Fig. 2 zeigt ein zweites Ausführungsbeispiel eines erfindungsgemäßen Verfahrens zur Steuerung eines Zweirads mit einem Elektromotor.
Fig. 3 zeigt ein Ausführungsbeispiel eines erfindungsgemäßen Zweirads mit einem Elektromotor und mit einer erfindungsgemäßen Vorrichtung.

### Beschreibung von Ausführungsbeispielen

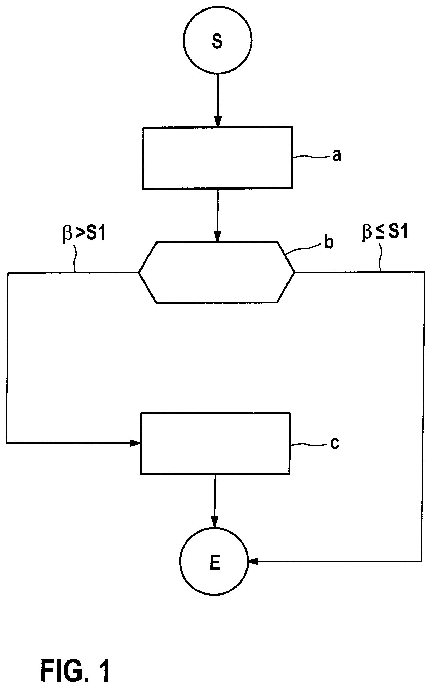

Fig. 1 zeigt ein erstes Ausführungsbeispiel eines erfindungsgemäßen Verfahrens zur Steuerung eines Zweirads mit einem Elektromotor.

Zuerst wird in einem Verfahrensschritt a ein Neigungswinkels β eines Zweirads 50 zu einem ersten Zeitpunkt ermittelt.

Insbesondere ist es denkbar, dass der Neigungswinkel β mittels eines am Zweirad 50 angeordneten Beschleunigungssensor 20 ermittelt wird. Alternativ oder zusätzlich kann der Neigungswinkel β mittels eines am Zweirad 50 angeordneten Neigungssensors 30 ermittelt werden.

In einem Verfahrensschritt b wird anschließend der ermittelte Neigungswinkel β mit einem ersten Schwellenwert S1 verglichen.

Besonders bevorzugt wird hierbei der erste Schwellenwert derartig gewählt, dass wenn der Neigungswinkel β den ersten Schwellenwert überschreitet, ein Umfallen des Zweirads während dem Stillstand bzw. einer langsamen Bewegung, beispielsweise in Schrittgeschwindigkeit, vermutet werden kann. Der erste Schwellenwert kann beispielsweise mit 45° vorbestimmt werden.

Anschließend läuft nach dem Verfahrensschritt b ein Verfahrensschritt c ab, wenn im Verfahrensschritt b festgestellt wird, dass der ermittelte Neigungswinkel β größer als der erste Schwellenwert S1 ist.

Im Verfahrensschritt c wird das Zweirad 50 derartig angesteuert, dass kein Drehmoment mittels eines Elektromotors 60 des Zweirads 50 an ein Antriebrad 70 des Zweirads 50 abgebbar ist.

Der Verfahrensschritt c kann beispielsweise umgesetzt werden, indem ein Gashebel des Zweirads 50 nicht mehr eingelesen wird beziehungsweise ein Signal vom Gashebel nicht weitergeleitet wird und daher der Elektromotor 60 entsprechend nicht angesteuert wird. Alternativ oder zusätzlich kann auch der Elektromotor 60 einfach abgeschaltet werden. Zudem kann alternativ oder zusätzlich beispielsweise die mechanische Verbindung zwischen Elektromotor 60 und Antriebrad 70 an einer Stelle unterbrochen werden, zum Beispiel indem eine Kupplung entsprechend angesteuert wird, wodurch insbesondere ein Leerlauf des Elektromotors 60 umgesetzt wird, um die Drehmomentabgabe an das Antriebsrad 70 zu unterbinden.

Insbesondere kann im Verfahrensschritt c das Zweirad 50 derartig angesteuert werden, dass bis zu einem zweiten Zeitpunkt kein Drehmoment mittels des Elektromotors 60 an das Antriebsrad 70 des Zweirads 50 abgebbar ist, wobei der zweite Zeitpunkt nach dem ersten Zeitpunkt liegt.

Alternativ oder zusätzlich kann im Verfahrensschritt c das Zweirad 50 in einen Neutral-Modus überführt wird, wobei im Neutral-Modus kein Drehmoment mittels des Elektromotors 60 an das Antriebsrad 70 des Zweirads 50 abgebbar ist.

Nach dem Verfahrensschritt c kann das Verfahren beendet werden.

Das Verfahren kann jedoch beliebig oft neu gestartet werden, um eine ausreichende Überwachung des Zweirads zu ermöglichen.

Insbesondere kann nach dem Verfahrensschritt c ein weiterer bildlich nicht dargestellter Verfahrensschritt ablaufen, in welchem der Elektromotor 60 derartig angesteuert wird, dass ein Drehmoment mittels des Elektromotors 60 wieder abgebbar ist. Beispielsweise kann dies durch einen Wahlhebel des Zweirads 50 erfolgen, welcher das Zweirad 50 vom Neutral-Modus in einen Fahr-Modus versetzt. Alternativ oder zusätzlich kann das Zweirad 50 derartig angesteuert werden, dass eine Drehmomentabgabe nach dem zweiten Zeitpunkt wieder ermöglicht wird.

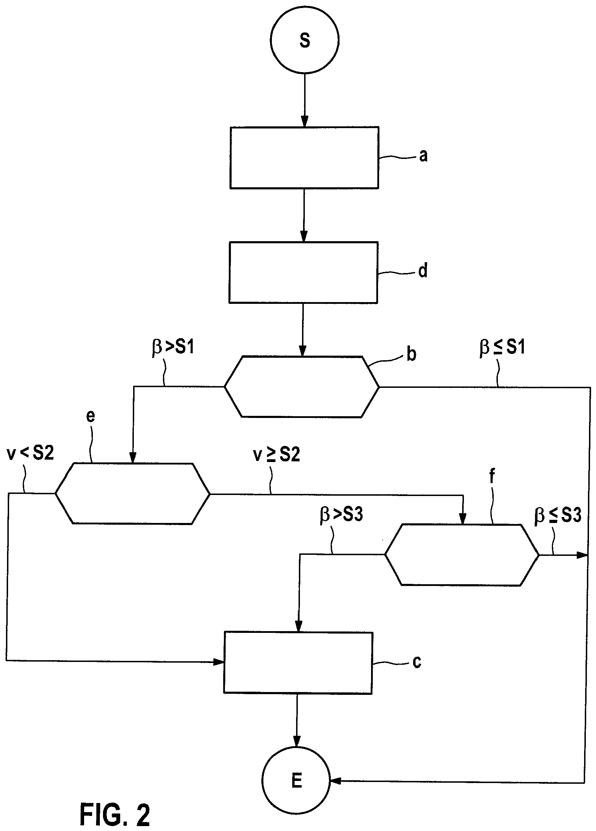

Fig. 2 zeigt ein zweites Ausführungsbeispiel eines erfindungsgemäßen Verfahrens zur Steuerung eines Zweirads mit einem Elektromotor.

Das Verfahren umfasst die gleichen Verfahrensschritte a bis c wie das Verfahren gemäß Fig. 1. Zudem läuft jedoch vor dem Verfahrensschritt b ein Verfahrensschritt d ab, in welchem, insbesondere zum ersten Zeitpunkt, eine Geschwindigkeit v des Zweirads 50 ermittelt wird. Wird anschließend im Verfahrensschritt b bestimmt, dass der ermittelte Neigungswinkel β größer als der erste Schwellenwert S1 ist, läuft nach dem Verfahrensschritt b ein Verfahrensschritt e ab, in welchem die ermittelte Geschwindigkeit v mit einem zweiten Schwellenwert S2 verglichen wird. Ist die ermittelte Geschwindigkeit v kleiner als der zweite Schwellenwert S2, läuft nach dem Verfahrensschritt e dann der Verfahrensschritt c ab.

Der zweite Schwellenwert kann beispielsweise auf 5 oder 10 km/h festgelegt werden. Hierdurch lässt sich unterscheiden, ob das Zweirad stillsteht bzw. sich nur langsam bewegt oder doch mit einer entsprechenden Geschwindigkeit fortbewegt.

Insbesondere kann im Verfahrensschritt d die Geschwindigkeit v des Zweirads 50 mittels eines am Zweirad 50 angeordneten Beschleunigungssensors 20 ermittelt werden. So kann beispielsweise ein entlang der Fahrtrichtung des Zweirads 50 mittels des Beschleunigungssensor 20 erfasstes Beschleunigungssignal integriert werden, um die Geschwindigkeit v des Zweirads 50 zu erhalten.

Des Weiteren kann, wenn im Verfahrensschritt e die ermittele Geschwindigkeit v größer gleich dem zweiten Schwellenwert S2 ist, nach dem Verfahrensschritt e ein Verfahrensschritt f ablaufen, in welchem der ermittelte Neigungswinkel β mit einem dritten Schwellenwert S3 verglichen wird, wobei der dritte Schwellenwert S3 größer als der erste Schwellenwert S1 ist. Wenn der ermittelte Neigungswinkel β größer als der dritte Schwellenwert S3 ist, kann dann nach dem Verfahrensschritt f der Verfahrensschritt c ablaufen.

Der dritte Schwellenwert kann beispielsweise 60° betragen. Hierdurch kann auch bei einer entsprechenden Fahrt, bei welcher das Zweirad 50 beispielsweise in Kurven zur Seite geneigt ist, davon ausgegangen werden, dass die Neigung welche den dritten Schwellenwert S3 übersteigt, auf ein Umkippen des Zweirads 50 schließen lässt.

Nicht dargestellt kann in einem alternativen Ausführungsbeispiel, wenn im Verfahrensschritt b der ermittelte Neigungswinkel β größer als der erste Schwellenwert S1 ist, nach dem Verfahrensschritt b ein Verfahrensschritt d ablaufen, in welchem eine Geschwindigkeit v des Zweirads 50 ermittelt wird, und nach dem Verfahrensschritt d ein Verfahrensschritt e ablaufen, in welchem die ermittelte Geschwindigkeit v mit einem zweiten Schwellenwert S2 verglichen wird, wobei wenn die ermittelte Geschwindigkeit v kleiner als der zweite Schwellenwert S2 ist, nach dem Verfahrensschritt e der Verfahrensschritt c abläuft.

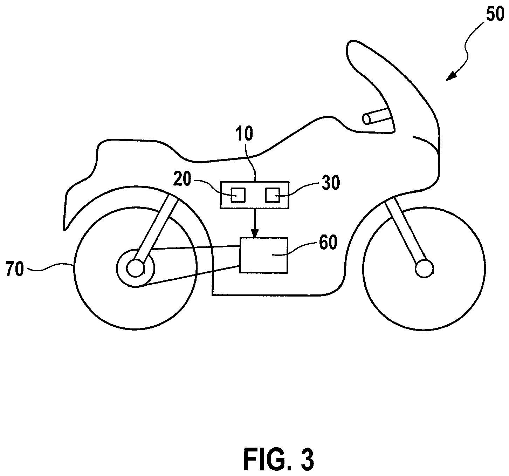

Fig. 3 zeigt ein Ausführungsbeispiel eines erfindungsgemäßen Zweirads mit einem Elektromotor und mit einer erfindungsgemäßen Vorrichtung.

Dargestellt ist ein Zweirad 50. Das Zweirad 50 kann beispielsweise ein Motorrad sein. Das Zweirad 50 weist einen Elektromotor 60 und eine Vorrichtung 10 auf. Der Elektromotor 60 ist entsprechend mit einem Antriebsrad 70 des Zweirads 50 derartig in Verbindung, dass mittels des Elektromotors 60 bei entsprechender Ansteuerung ein Drehmoment an das Antriebsrad 70 übertragen werden kann, um das Zweirad 50 anzutreiben.

Die Vorrichtung 10 ist bevorzugt am Zweirad 50 angeordnet. Die Vorrichtung 10 weist wiederum insbesondere einen Beschleunigungssensor 20 und einen Neigungssensor 30 auf, welche mittels der Vorrichtung 10 fest am Zweirad 50 angeordnet sind.

In einem alternativen, bildlich nicht dargestellten Ausführungsbeispiel ist es denkbar, dass der Beschleunigungssensor 20 und/oder der Neigungssensor 30 nicht von der Vorrichtung 10 umfasst ist, sondern anderweitig am Zweirad 50 fest angeordnet sind.

Des Weiteren weist die Vorrichtung 10 eine nicht dargestellte Verarbeitungseinheit auf, um beispielsweise das Verfahren gemäß Fig. 1 oder Fig. 2 auszuführen.

## Patentansprüche

1. Verfahren zur Steuerung eines Zweirads (50) mit einem Elektromotor (60), aufweisend wenigstens die folgenden Verfahrensschritte:
a. Ermitteln eines Neigungswinkels (β) des Zweirads (50) zu einem ersten Zeitpunkt,
d. Ermitteln einer Geschwindigkeit (v) des Zweirads (50) zu einem ersten Zeitpunkt;
b. Vergleichen des ermittelten Neigungswinkels (β) mit einem ersten Schwellenwert (S1), und wenn der ermittelte Neigungswinkel (β) größer als der erste Schwellenwert (S1) ist,
e. Vergleichen der ermittelten Geschwindigkeit (v) mit einem zweiten Schwellenwert (S2), und wenn die ermittelte Geschwindigkeit (v) kleiner als der zweite Schwellenwert (S2) ist,
c. Ansteuern des Zweirads (50) durch Nicht-Einlesen und/oder Nicht-Weiterleiten eines Signals des Gashebels, Abschalten des Elektromotors und/oder durch Unterbrechen einer mechanischen Verbindung zwischen Elektromotor und Antriebsrad [Seite 2, Zeilen 24 ff.], dass kein Drehmoment mittels des Elektromotors (60) an ein Antriebrad (70) des Zweirads (50) abgebbar ist.

2. Verfahren nach Anspruch 1, **dadurch gekennzeichnet, dass** im Verfahrensschritt c das Zweirad (50) derartig angesteuert wird, dass bis zu einem zweiten Zeitpunkt kein Drehmoment mittels des Elektromotors (60) an das Antriebsrad (70) des Zweirads (50) abgebbar ist, wobei der zweite Zeitpunkt nach dem ersten Zeitpunkt liegt.

3. Verfahren nach einem der vorhergehenden Ansprüche, **dadurch gekennzeichnet, dass** im Verfahrensschritt c das Zweirad (50) in einen Neutral-Modus überführt wird, wobei im Neutral-Modus kein Drehmoment mittels des Elektromotors (60) an das Antriebsrad (70) des Zweirads (50) abgebbar ist.

4. Verfahren nach einem der Ansprüche 1 bis 3, **dadurch gekennzeichnet, dass** wenn im Verfahrensschritt b der ermittelte Neigungswinkel (β) größer als der erste Schwellenwert (S1) ist, nach dem Verfahrensschritt b ein Verfahrensschritt d abläuft, in welchem eine Geschwindigkeit (v) des Zweirads (50) ermittelt wird, und nach dem Verfahrensschritt d ein Verfahrensschritt e abläuft, in welchem die ermittelte Geschwindigkeit (v) mit einem zweiten Schwellenwert (S2) verglichen wird, wobei wenn die ermittelte Geschwindigkeit (v) kleiner als der zweite Schwellenwert (S2) ist, nach dem Verfahrensschritt e der Verfahrensschritt c abläuft.

5. Verfahren nach einem der Ansprüche 1 bis 4, **dadurch gekennzeichnet, dass** wenn im Verfahrensschritt e die ermittele Geschwindigkeit (v) größer gleich dem zweiten Schwellenwert (S2) ist, nach dem Verfahrensschritt e ein Verfahrensschritt f abläuft, in welchem der ermittelte Neigungswinkel (β) mit einem dritten Schwellenwert (S3) verglichen wird, wobei der dritte Schwellenwert (S3) größer als der erste Schwellenwert (S1) ist, und wenn der ermittelte Neigungswinkel (β) größer als der dritte Schwellenwert (S3) ist, nach dem Verfahrensschritt f der Verfahrensschritt c abläuft.

6. Verfahren nach einem der Ansprüche 1 bis 5, **dadurch gekennzeichnet, dass** im Verfahrensschritt d die Geschwindigkeit (v) mittels eines am Zweirad (50) angeordneten Beschleunigungssensors (20) ermittelt wird.

7. Verfahren nach einem der vorhergehenden Ansprüche, **dadurch gekennzeichnet, dass** im Verfahrensschritt b der Neigungswinkel (β) mittels eines am Zweirad (50) angeordneten Beschleunigungssensor (20) ermittelt wird.

8. Verfahren nach einem der vorhergehenden Ansprüche, **dadurch gekennzeichnet, dass** im Verfahrensschritt b der Neigungswinkel (β) mittels eines am Zweirad (50) angeordneten Neigungssensors (30) ermittelt wird.

9. Vorrichtung (10) zur Steuerung eines Zweirads (50) mit einem Elektromotor (60), wobei die Vorrichtung (10) dazu eingerichtet ist, ein Verfahren nach einem der vorhergehenden Ansprüche durchzuführen.

10. Zweirad (50) mit einem Elektromotor (60) und einer Vorrichtung (10) nach Anspruch 9.

## Claims

1. Method for controlling a two-wheeled vehicle (50) having an electric motor (60), including at least the following method steps:
a. determining a tilt angle (β) of the two-wheeled vehicle (50) at a first time,
d. determining a speed (v) of the two-wheeled vehicle (50) at a first time;
b. comparing the determined tilt angle (β) to a first threshold value (S1), and, if the determined tilt angle (β) is greater than the first threshold value (S1),
e. comparing the determined speed (v) to a second threshold value (S2), and, if the determined speed (v) is smaller than the second threshold value (S2),
c. controlling the two-wheeled vehicle (50) by not reading and/or not transmitting a signal from the accelerator, deactivating the electric motor and/or interrupting a mechanical connection between electric motor and drive wheel [page 2, lines 24 ff.] so that no torque can be provided to a drive wheel (70) of the two-wheeled vehicle (50) by the electric motor (60).

2. Method according to Claim 1, **characterized in that** the two-wheeled vehicle (50) is controlled in such a way in method step c that no torque can be provided to the drive wheel (70) of the two-wheeled vehicle (50) by the electric motor (60) until a second time, the second time being after the first time.

3. Method according to any of the preceding claims, **characterized in that** the two-wheeled vehicle (50) is transferred into a neutral mode during method step c), wherein no torque can be provided to the drive wheel (70) of the two-wheeled vehicle (50) by the electric motor (60) in the neutral mode.

4. Method according to any of Claims 1 to 3, **characterized in that** if the determined tilt angle (β) in method step b is greater than the first threshold value (S1), method step b is followed by the implementation of a method step d, in which a speed (v) of the two-wheeled vehicle (50) is determined, and method step d is followed by the implementation of a method step e, in which the determined speed (v) is compared to a second threshold value (S2), wherein the implementation of method step c follows method step e if the determined speed (v) is smaller than the second threshold value (S2) .

5. Method according to any of Claims 1 to 4, **characterized in that** if the determined speed (v) in method step e is greater than or equal to the second threshold value (S2), method step e is followed by the implementation of a method step f, in which the determined tilt angle (β) is compared to a third threshold value (S3), wherein the third threshold value (S3) is greater than the first threshold value (S1), and if the determined tilt angle (β) is greater than the third threshold value (S3), then method step f is followed by the implementation of method step c.

6. Method according to any of Claims 1 to 5, **characterized in that** the speed (v) is determined in method step d by means of an acceleration sensor (20) arranged on the two-wheeled vehicle (50).

7. Method according to any of the preceding claims, **characterized in that** the tilt angle (β) is determined in method step b by means of an acceleration sensor (20) arranged on the two-wheeled vehicle (50).

8. Method according to any of the preceding claims, **characterized in that** the tilt angle (β) is determined in method step b by means of a tilt sensor (30) arranged on the two-wheeled vehicle (50).

9. Device (10) for controlling a two-wheeled vehicle (50) having an electric motor (60), wherein the device (10) is configured to carry out a method according to any of the preceding claims.

10. Two-wheeled vehicle (50) having an electric motor (60) and a device (10) according to Claim 9.

## Revendications

1. Procédé de commande d'un deux roues (50) doté d'un moteur électrique (60), comportant au moins les étapes de procédé suivantes :
a. déterminer un angle d'inclinaison (β) du deux-roues (50) à un premier instant,
d. Déterminer une vitesse (v) du deux-roues (50) à un premier instant ;
b. comparer l'angle d'inclinaison (β) déterminé à une première valeur de seuil (S1), et si l'angle d'inclinaison (β) déterminé est supérieur à la première valeur de seuil (S1),
e. comparer la vitesse (v) déterminée à une deuxième valeur de seuil (S2), et si la vitesse (v) détectée est inférieure à la deuxième valeur de seuil (S2),
c. commander le deux-roues (50) par non-lecture et/ou non-transmission d'un signal provenant de la manette des gaz, par arrêt du moteur électrique et/ou par interruption d'une liaison mécanique entre le moteur électrique et la roue motrice [page 2, lignes 24 et suivantes], de telle sorte qu'aucun couple ne puisse être délivré au moyen du moteur électrique (60) à une roue motrice (70) du deux-roues (50).

2. Procédé selon la revendication 1, **caractérisé en ce que**, lors de l'étape c du procédé, le deux-roues (50) est commandé de telle sorte que jusqu'à un deuxième instant, aucun couple ne puisse être délivré au moyen du moteur électrique (60) à la roue motrice (70) du deux-roues (50), le deuxième instant étant postérieur au premier instant.

3. Procédé selon l'une des revendications précédentes, **caractérisé en ce que** lors de l'étape c du procédé, le deux-roues (50) est mis dans un mode neutre, dans lequel, en mode neutre, aucun couple ne peut être délivré à la roue motrice (70) du deux-roues (50) au moyen du moteur électrique (60).

4. Procédé selon l'une des revendications 1 à 3, **caractérisé en ce que** si, lors de l'étape b du procédé, l'angle d'inclinaison (β) déterminé est supérieur à la première valeur de seuil (S1), après l'étape b du procédé il se produit une étape d du procédé, lors de laquelle une vitesse (v) du deux-roues (50) est déterminée, et après l'étape d du procédé il se produit une étape e du procédé, lors de laquelle la vitesse (v) déterminée est comparée à une deuxième valeur de seuil (S2), dans lequel, si la vitesse (v) déterminée est inférieure à la deuxième valeur de seuil (S2), après l'étape e du procédé il se produit l'étape c du procédé.

5. Procédé selon l'une des revendications 1 à 4, **caractérisé en ce que** si, lors de l'étape e du procédé, la vitesse (v) déterminée est supérieure ou égale à la deuxième valeur de seuil (S2), après l'étape e du procédé, il se produit une étape f du procédé, lors de laquelle l'angle d'inclinaison (β) déterminé est comparé à une troisième valeur de seuil (S3), la troisième valeur de seuil (S3) étant supérieure à la première valeur de seuil (S1), et si l'angle d'inclinaison (β) déterminé est supérieur à la troisième valeur de seuil (S3), l'étape c du procédé se produit après l'étape f du procédé.

6. Procédé selon l'une des revendications 1 à 5, **caractérisé en ce que** lors de l'étape d du procédé, la vitesse (v) est déterminée au moyen d'un capteur d'accélération (20) disposé sur le deux-roues (50).

7. Procédé selon l'une des revendications précédentes, **caractérisé en ce que** lors de l'étape b du procédé, l'angle d'inclinaison (β) est déterminé au moyen d'un capteur d'accélération (20) disposé sur le deux-roues (50) .

8. Procédé selon l'une des revendications précédentes, **caractérisé en ce que** lors de l'étape b du procédé, l'angle d'inclinaison (β) est déterminé au moyen d'un capteur d'inclinaison (30) disposé sur le deux-roues (50) .

9. Dispositif (10) de commande d'un deux-roues (50) doté d'un moteur électrique (60), le dispositif (10) étant conçu pour mettre en œuvre un procédé selon l'une des revendications précédentes.

10. Deux-roues (50) doté d'un moteur électrique (60) et d'un dispositif (10) selon la revendication 9.
